# EUROPEAN PATENT APPLICATION

(11) **EP 2 568 318 A2**
(43) Date of publication of application: **13.03.2013**
(21) Application number: 12275137.3
(22) Date of filing: 07.09.2012
(51) Int. Cl.: G02B 3/00, G02B 13/00

(54) **Lens module and manufacturing method thereof**

(30) Priority: 09.09.2011 KR 20110091960
(71) Applicant: Samsung Electro-Mechanics Co., Ltd, Suwon, Gyunggi-Do (KR)
(72) Inventor: Lee, Kwang Chun, Gyunggi-do (KR); Lee, Seok Cheon, Gyunggi-do (KR)
(74) Representative: Powell, Timothy John

(57) **Abstract**

There is provided a lens module including: a first lens member including an optical part and a bonding part; and an identification mark printed on the first lens member. Further, there is provided a lens module manufacturing method, the manufacturing method including: preparing a first lens member including an optical part and a bonding part; and printing and forming a light shielding film and an identification mark on the bonding part.

## Description

### CROSS-REFERENCE TO RELATED APPLICATIONS

This application claims the priority of Korean Patent Application No. 10-2011-0091960 filed on September 9, 2011, in the Korean Intellectual Property Office, the disclosure of which is incorporated herein by reference.

### BACKGROUND OF THE INVENTION

### Field of the Invention

The present invention relates to a lens module and a manufacturing method thereof, and more particularly, to a lens module including an identification mark capable of signifying types and characteristics of lenses included therein, and a manufacturing method thereof.

### Description of the Related Art

In accordance with the spread of portable phones or portable electronic devices including a camera function, demand for a small lens, to be mounted in a small camera module, has increased.

Since a lens used for the portable electronic devices as described above does not require a high degree of precision, it is manufactured using a wafer or a mold. Further, a photo-curable resin on which mechanical processing does not need to be performed is mainly used as a lens material.

Lens manufacturing using the photo-curable resin (or a lens molding material) is performed by introducing a liquid state resin into the mold and then curing the introduced liquid state resin to have a solid state.

However, since most resins shrink when they are cured from the liquid state to the solid state, a lens formed thereof may not be manufactured to have the same shape as a mold used therefor. Therefore, respective lens units among lenses manufactured by using the scheme as described above may have differing optical characteristics and qualities according to the size thereof. Therefore, a mark indicating the optical characteristics and the qualities of lenses is required.

However, in the case in which a separate identification mark is formed on a surface of a lens, bonding between lenses is difficult and a lens manufacturing cost may be increased.

Therefore, the development of lenses in which an increase in manufacturing costs is not incurred, while leaving bonding between the lenses unaffected has been demanded.

### SUMMARY OF THE INVENTION

An aspect of the present invention provides a lens module in which optical characteristics and qualities of lenses are indicated without bonding strength between lenses being affected, and a manufacturing method thereof.

According to an aspect of the present invention, there is provided a lens module including: a first lens member including an optical part and a bonding part; and an identification mark printed on the first lens member.

The lens module may further include a second lens member bonded to the first lens member.

The lens module may further include a light shielding film printed on the bonding part.

The identification mark may be formed together with the light shielding film.

The light shielding film may be formed on a first surface of the first lens member, and the identification mark may be formed on a second surface of the first lens member.

The identification mark may be printed on a side surface of the first lens member.

According to another aspect of the present invention, there is provided a lens module manufacturing method, the manufacturing method including: preparing a first lens member including an optical part and a bonding part; and printing and forming a light shielding film and an identification mark on the bonding part.

The printing of the light shielding film and the identification mark may include printing and forming the light shielding film; drying ink forming the light shielding film; and printing and forming the identification mark on the light shielding film.

The identification mark may be printed using ink having a color different from that of the light shielding film.

### BRIEF DESCRIPTION OF THE DRAWINGS

The above and other aspects, features and other advantages of the present invention will be more clearly understood from the following detailed description taken in conjunction with the accompanying drawings, in which:
FIG. 1 is a perspective view of a lens module according to a first embodiment of the present invention;
FIG. 2 is a perspective view of a lens module according to a second embodiment of the present invention;
FIG. 3 is a perspective view of a lens module according to a third embodiment of the present invention;
FIG. 4 is a perspective view of a lens module according to a fourth embodiment of the present invention;
FIG. 5 is a view showing a manufacturing method according to a first embodiment for manufacturing the lens module shown in FIG. 3; and
FIG. 6 is a view showing a manufacturing method according to a second embodiment for manufacturing the lens module shown in FIG. 3.

### DETAILED DESCRIPTION OF THE EMBODIMENTS

Hereinafter, embodiments of the present invention will be described in detail with reference to the accompanying drawings. The invention may, however, be embodied in many different forms and should not be construed as being limited to the embodiments set forth herein. Rather, these embodiments are provided so that this disclosure will be thorough and complete, and will fully convey the scope of the invention to those skilled in the art.

In the drawings, the shapes and dimensions of elements may be exaggerated for clarity, and the same reference numerals will be used throughout to designate the same or like elements.

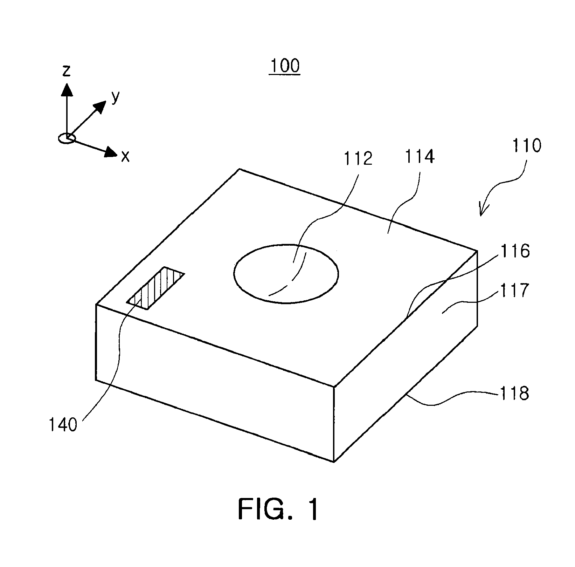

FIG. 1 is a perspective view of a lens module according to a first embodiment of the present invention.

The lens module 100 according to the first embodiment of the present invention may include a first lens member 110 and an identification mark 140.

The first lens member 110 may include a first optical part 112 and a first bonding part 114. The first optical part 112 may form a lens surface in the first lens member 110. The first optical part 112 may have a convex or concave shape. However, a shape of the first optical part 112 may be changed according to a type and a function of the lens module 100 to be manufactured. In addition, the shape of the first optical part 112 may be changed according to a position on which the first lens member 110 will be installed in the lens module 100. For example, in the case in which the first lens member 110 is a lens member closest to an object side in the lens module 100, the first optical part 112 may have the convex shape. Unlike this, in the case in which the first lens member 110 is a lens member closest to an image sensor side in the lens module 100, the first optical part 112 may have the concave shape. However, the shape of the first lens member 110 as described above may be opposite to that of the example as described above according to the number of lenses configuring the lens module 100. In addition, the first optical part 112 may have a spherical surface or an aspherical surface, or may be planar, as required. The first bonding part 114 may be directly or indirectly bonded to another lens member or components of another lens module (for example, a second lens member 120 or a spacer). Therefore, the first bonding part 114 may be a flat surface without a bend so as to be adhered to another member as closely as possible. For reference, a reference numeral 117 represents a side surface of the first lens member 110.

The identification mark 140, a component for indicating optical characteristics and quality of the first lens member 110, may be marked on the first lens member 110. The identification mark 140 may be printed in a printing scheme and may be manufactured in a relatively thin film form and then attached to the first lens member 110. Alternatively, the identification mark 140 may be formed in a scheme in which a portion of the first bonding part 114 is burned using a high temperature tool. Meanwhile, the identification mark 140 may have a form of a symbol, a character, a figure, or a combination thereof capable of implying several meanings. For example, the identification mark 140 may have a form of O in the case in which the first lens member 110 is non-defective and be marked in a form of X in the case in which the first lens member 110 is defective. The identification mark 140 as described above may signify whether the first lens member 110 is defective or non-defective to be identified as such so as to facilitate quality management of the lens member 110.

In addition, the identification mark 140 may be used as a mark for discriminating a first surface 116 (an upper surface) and a second surface 118 (a lower surface) of the first lens member 110 from each other. The identification mark 140 as described above may be usefully used for the lens member in which discrimination between the first surface 116 and the second surface 118 is required. For example, shapes of an optical part of the first surface 116 and an optical part of the second surface 118 may be usefully used for the lens member.

In addition, the identification mark 140 may be used as a mark for indicating a history of product production of the first lens member 110 and may be used as a mark for discriminating a horizontal direction (an X axis direction) and a vertical direction (a Y axis direction) from each other in the first lens member 110. As described in the related art, since the lens member formed of a plastic material is manufactured based on a wafer, the lens member may have different optical characteristics and qualities according to a position thereof on the wafer. In addition, the respective lens members having a unit size may have horizontal and vertical lengths that do not accurately coincide with each other during a process of cutting a wafer. Therefore, in the case in which the history of the product production of the lens member as described above is marked using the identification mark 140, assembly accuracy of the lens module using the lens member and the quality of the lens module may be improved.

In the lens module 100 configured as described above, the identification mark 140 is formed in the first lens member 110 in the printing scheme, whereby the surface of the first lens member 110 may not be significantly damaged. In addition, in the present embodiment, the identification mark 140 is formed in the printing scheme, whereby the identification mark 140 may be easily formed in the shape in which it may indicate both of the optical characteristics and the quality of the lens member.

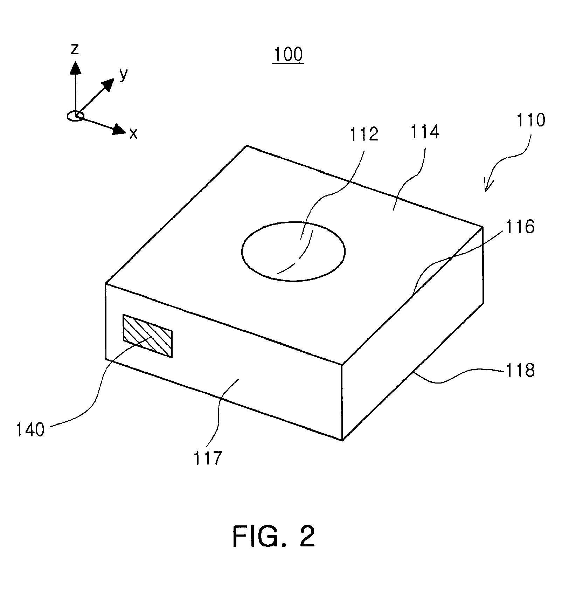

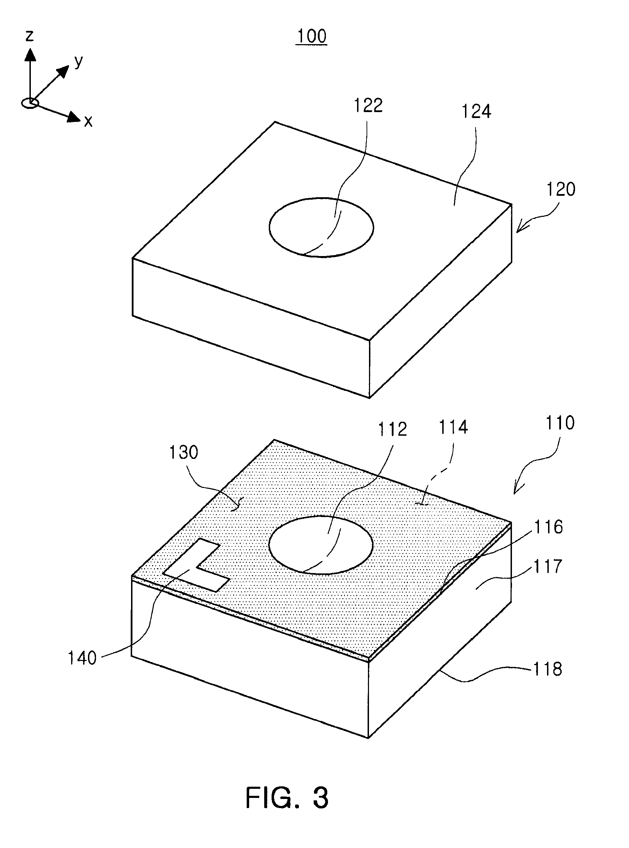

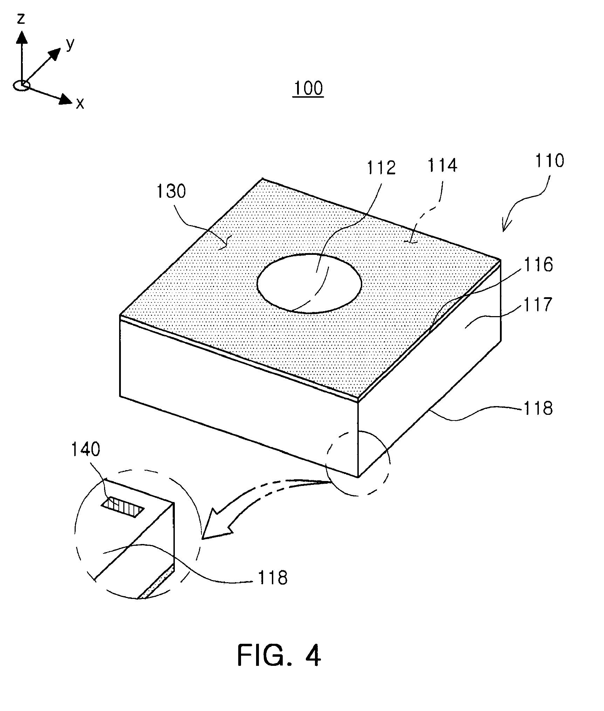

Next, other embodiments of the present invention will be described with reference to FIGS 2 through 4. FIG. 2 is a perspective view of a lens module according to a second embodiment of the present invention, FIG. 3 is a perspective view of a lens module according to a third embodiment of the present invention, and FIG. 4 is a perspective view of a lens module according to a fourth embodiment of the present invention.

The lens module 100 according to the second embodiment of the present invention may differ in terms of a position of an identification mark 140 from the lens module 100 according to the first embodiment of the present invention. In the present embodiment, the identification mark 140 may be formed on a side surface 117 of the first lens member 110, as shown in FIG. 2.

In general, since the first surface 116 or the second surface 118 of the first lens member 110 is a portion on which another member, a spacer, or a light shielding film is attached or formed, there may be a limitation in forming the identification mark 140 on the first surface 116 or on the second surface 118. In the present embodiment, in consideration of this point, the identification mark 140 may be formed on the side surface 117 of the first lens member 110. As described above, in the case in which the identification mark 140 is formed on the side surface 117 of the first lens member 110, even in the state in which a plurality of lens members are stacked, each of the lens members may be discriminated from each other. For example, in the case in which the plurality of lens members are stacked differently from a design of the lens module, it may be found through the identification mark 140 formed on the side surface 117 of the first lens member 110 that the plurality of lens members are stacked differently from the design of the lens module.

Therefore, the present embodiment may be usefully used in the case in which the plurality of lens members are stacked to manufacture the lens module.

The lens module 100 according to the third embodiment of the present invention may be different from the lens module 100 according to the embodiments as described above in that it further includes a second lens member 120 and a light shielding film 130, as shown in FIG. 3.

That is, in the present embodiment, the second lens member 120 may be attached to the first lens member 110 to be mounted thereon and the identification mark 140 may be utilized as a mark for discriminating between the first lens member 110 and the second lens member 120. Here, the second lens member 120 may include a second optical part 122 and a second bonding part 124 and may be formed of a material having a refractive index different from that of the first lens member 110. In addition, the second optical part 122 may have optical characteristics different from those of the first optical part 112 and have a concave or convex shape. In addition, the second optical part 122 may have a spherical surface or an aspherical surface, or may be planar, as required.

The light shielding film 130 may be attached to or printed on the first bonding part 114 of the first lens member 110. That is, the light shielding film 130 may be formed of a relatively thin film material or may be a film formed by printing ink in a printing scheme. In either case, the light shielding film 130 may have light shielding characteristics and may selectively have antireflection characteristics. In addition, the light shielding film 130 may be formed in the printing scheme together with the identification mark 140 or may be formed separately from the identification mark 140.

Meanwhile, although FIG. 3 shows a case in which the second lens member 120 is attached to the first lens member 110 to be stacked on the first lens member 110, the first lens member 110 may also be attached to the second lens member 120 to be stacked on the second lens member 120 according to characteristics of the lens module 100 to be manufactured. In addition, the second lens member 120 may be provided with the identification mark 140 having a shape different from that of the identification mark 140 of the first lens member 110. In addition, the lens module 100 according to the present embodiment may be configured of three or more sheets of lens members.

Since the lens module 100 configured as described above may include a plurality of lens members 110 and 120, it may be usefully used in a camera module requiring relatively high resolution. Further, in the present embodiment, the light shielding film 130 preventing spill light from being incident is formed between the lens members 110 and 120, whereby the quality of the lens module 100 may be improved.

The lens module 100 according to the fourth embodiment of the present invention may be different in positions of a light shielding film 130 and an identification mark 140 from the lens module 100 according to the third embodiment of the present invention.

That is, in the present embodiment, as shown in FIG. 4, the light shielding film 130 may be formed on a first surface 116 of the first lens member 110 and the identification mark 140 may be formed on a second surface 118 of the first lens member 110.

In general, since the light shielding film 130 has a dark color (for example, a black color), in the case in which the identification mark 140 is formed in the light shielding film 130, the identification mark 140 may not be easily recognized with the naked eye. In the present embodiment, in consideration of this point, the identification mark 140 may be formed on the second surface 118 of the first lens member 110 on which the light shielding film 130 is not formed.

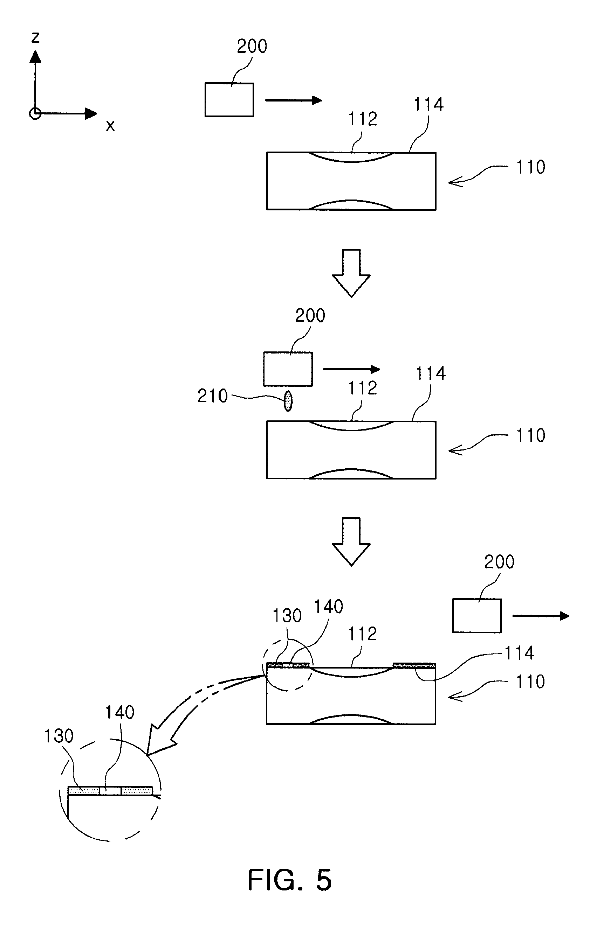

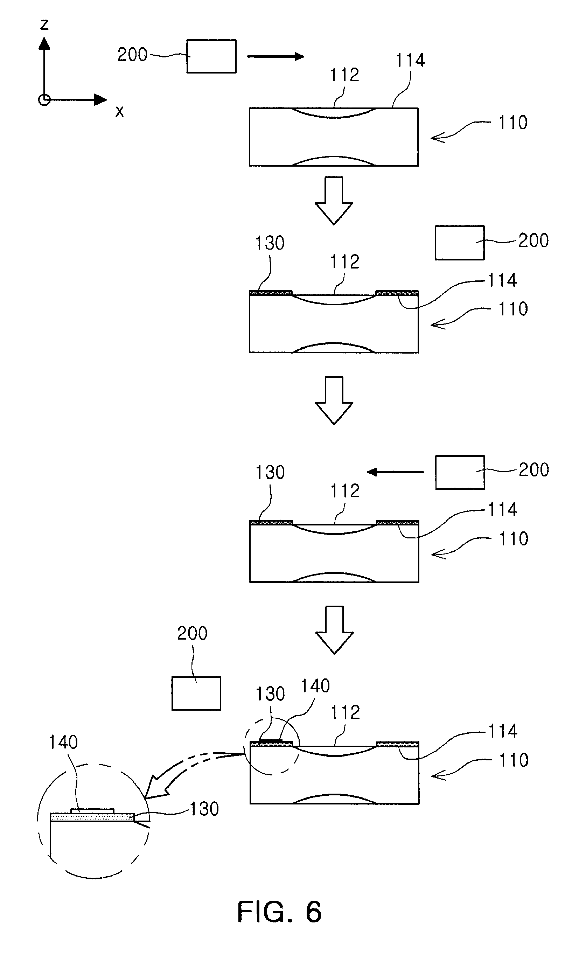

Next, a manufacturing method of the lens module according to the third embodiment of the embodiments described above will be described. FIG. 5 is a view showing a manufacturing method according to a first embodiment for manufacturing the lens module shown in FIG. 3; and FIG. 6 is a view showing a manufacturing method according to a second embodiment for manufacturing the lens module shown in FIG. 3.

(Manufacturing Method of Lens Module according to a First Embodiment)

In the manufacturing method of the lens module according to the present embodiment, the light shielding film 130 and the identification mark 140 may be simultaneously formed in a printing scheme using a print head 200. That is, the manufacturing method of the lens module according to the present embodiment may include a preparation operation of a first lens member 110 and a printing operation using a print head 200.

1) Preparation operation

In this operation, a lens member in which the identification mark 140 is to be marked may be prepared and an operation environment of a printing device may be set.

First, an object (that is, the first lens member 110) in which the identification mark 140 is to be formed may be positioned on the printing device. In addition, when the first lens member 110 is aligned on the printing device, a size and a shape of the first lens member 110 may be input to the printing device. Additionally, shapes of the first optical part 112 and the first bonding part 114 of the first lens member 110 may be input to the printing device.

In this case, the printing device may set a region (hereinafter, referred to as a printed region) in which ink is to be sprayed and a region (hereinafter, referred to as a non-printed region) on which the ink is not to be sprayed, based on the shapes of the first optical part 112 and the first bonding part 114. In addition, the printing device may store the shape of the identification mark 140 to be formed on the first lens member 110 according to a user input signal and may set the corresponding shape as the non-printed region.

For reference, although the present embodiment has described the case that the object is the lens member having a unit size, the object may be a lens array including a plurality of unit lens members, as required.

2) Printing Operation

In this operation, a printing operation may be performed through the print head 200.

When the preparation operation described above is completed, the printing device may perform the printing operation through the print head 200.

The printing head 200 may perform printing on one surface of the first lens member 110 while moving from one side of the first lens member 110 to the other side thereof, based on data set in the printing device. Here, the print head 200 may only spray the ink on the first bonding surface 114, avoiding the first optical surface 112, to form the light shielding film 130 on one surface of the first lens member 110 and may not spray the ink in a region corresponding to the identification mark 140 in the first bonding surface 114.

In the method as described above, the light shielding film 130 and the identification mark 140 may be formed simultaneously in the first lens member 110, through a single printing process.

(Manufacturing Method of Lens Module according to a Second Embodiment)

The manufacturing method of the lens module according to the present embodiment may be different from the manufacturing method of the lends module according to the first embodiment in that a printing process of the light shielding film 130 and a printing process of the identification mark 140 may be separately performed.

That is, in the present embodiment, the light shielding film 130 may be formed on the first lens member 110 through a first printing process of the print head 200, and the identification mark 140 may be formed on the first lens member 110 through a second printing process of the print head 200.

Here, the second printing process of the print head 200 may be performed after the ink sprayed in the first printing process is completely dried and be a process of spraying ink having a color different from that of the ink used in the first printing process.

For example, in the first printing process, black ink for forming the light shielding film 130 may be sprayed through the print head 200, and in the second printing process, white ink (or bright colored ink obviously discriminated from the black ink) for forming the identification mark 140 may be sprayed through the print head 200. For reference, the print head 200 may include an ink storage chamber for storing the ink having different colors and may be configured in plural so as to spray different colors of ink.

As set forth above, according to the embodiments of the present invention, the identification mark indicating the optical characteristics and the qualities of the lenses without damaging the surface of the lenses may be formed.

Therefore, according to the present invention, the lenses formed of plastic material are classified and managed according to the optical characteristics and the qualities thereof, whereby the quality of the lens module (particularly, whether the lens module is the defective or the non-defective) may be effectively managed.

While the present invention has been shown and described in connection with the embodiments, it will be apparent to those skilled in the art that modifications and variations can be made without departing from the spirit and scope of the invention as defined by the appended claims.

## Claims

1. A lens module comprising:
a first lens member including an optical part and a bonding part; and
an identification mark printed on the first lens member.

2. The lens module of the claim 1, further comprising a second lens member bonded to the first lens member.

3. The lens module of the claim 1, further comprising a light shielding film printed on the bonding part.

4. The lens module of the claim 3, wherein the identification mark is formed together with the light shielding film.

5. The lens module of the claim 3, wherein the light shielding film is formed on a first surface of the first lens member, and
the identification mark is formed on a second surface of the first lens member.

6. The lens module of the claim 1, wherein the identification mark is printed on a side surface of the first lens member.

7. A lens module manufacturing method, the manufacturing method comprising:
preparing a first lens member including an optical part and a bonding part; and
printing and forming a light shielding film and an identification mark on the bonding part.

8. The manufacturing method of the claim 7, wherein the printing of the light shielding film and the identification mark includes:
printing and forming the light shielding film;
drying ink forming the light shielding film; and
printing and forming the identification mark on the light shielding film.

9. The manufacturing method of the claim 8, wherein the identification mark is printed using ink having a color different from that of the light shielding film.
